# EUROPÄISCHE PATENTSCHRIFT

(11) **EP 2 899 098 B1**
(45) Veröffentlichungstag und Bekanntmachung des Hinweises auf die Patenterteilung: **01.03.2017**
(21) Anmeldenummer: 14191609.8
(22) Anmeldetag: 04.11.2014
(51) Int. Cl.: B62D 15/02

(54) **Verfahren zur Durchführung eines Einparkvorgangs in eine Querparklücke und Einparkassistent**
Method for performing a parking procedure to a perpendicular parking spot and parking assistance system
Procédé d'exécution d'un processus de mise en stationnement d'un véhicule dans une place de stationnement perpendiculaire et assistant de stationnement

(30) Priorität: 12.12.2013 DE 102013225725
(43) Veröffentlichungstag der Anmeldung: 29.07.2015
(73) Patentinhaber: ROBERT BOSCH GMBH, 70442 Stuttgart (DE)
(72) Erfinder: Starke, Arwed, 70563 Stuttgart (DE)

(56) Entgegenhaltungen:
- EP-A1- 2 243 687
- EP-A2- 2 022 702
- DE-A1-102006 059 082
- US-A1- 2011 087 405

## Beschreibung

### Stand der Technik

Die Erfindung betrifft ein Verfahren zur Durchführung eines Einparkvorgangs eines Fahrzeugs in eine Parklücke.

Weiterhin werden ein Computerprogramm und ein Einparkassistent angegeben, welche zur Durchführung des Verfahrens eingerichtet sind, sowie ein Fahrzeug mit einem derartigen Einparkassistenten.

Einparkassistenten mit semiautonomer oder autonomer Führung des Fahrzeugs in eine Parklücke sind bekannt. Es existieren Einparkassistenten für das Einparken in Längsparklücken, sowie für das Einparken in Querparklücken, welche sowohl Vorwärts- als auch Rückwärtseinparken unterstützen. Auch Systeme zur Unterstützung eines Fahrers beim Navigieren eines Fahrzeugs in engen Gassen sind bekannt.

Bei vielen bekannten Systemen wird die Querführung des Fahrzeugs dadurch realisiert, dass eine elektrische Lenkung von einem Computerprogramm auf einem Steuergerät angesteuert wird, welches die Vorderräder lenkt.

Eine zusätzliche Ansteuerung eines Steuergeräts, welches Hinterräder des Fahrzeugs lenkt, wird beispielsweise in DE 10 2008 002 719 A1 beschrieben.

EP 2 098 440 A2 beschreibt eine gleichsinnige oder gegensinnige Ansteuerung der Hinterräder zusätzlich zu einem vorgegebenen Vorderachslenkwinkel, um Kollisionen mit durch eine Sensorik erkannten Hindernissen zu vermeiden.

DE 10 2011 010 370 A1 beschreibt eine gleichsinnige Ansteuerung der Hinterachslenkung in einem S-Zug oder einem Folgezug in einem Längsparkmanöver, wahlweise vorwärts oder rückwärts, um ein Ausscheren des Fahrzeugs zu vermeiden.

US2011087405 A1 ist als nächstliegender Stand der Technik zu sehen und offenbart ein Verfahren zur Durchführung eines Einparkvorgangs eines Fahrzeugs, wobei das Fahrzeug mittels einer Vorderachslenkung lenkbare Vorderräder und mittels einer Hinterachslenkung lenkbare Hinterräder aufweist, mit den Schritten:
a) Führen des Fahrzeugs von einer Startposition für den Einparkvorgang zu einer Referenzposition entlang eines ersten Streckenabschnittes, wobei das Führen des Fahrzeugs entlang des ersten Streckenabschnittes mit gegensinnig eingestellten Lenkwinkeln der Vorderräder und Hinterräder erfolgt,
b) Führen des Fahrzeugs von der Referenzposition bis zu einer Zielposition in der Querparklücke entlang eines zweiten Streckenabschnittes.

### Offenbarung der Erfindung

### Vorteile der Erfindung

Ein erfindungsgemäßes Verfahren zur Durchführung eines Einparkvorgangs eines Fahrzeugs in eine Querparklücke betrifft Fahrzeuge, welche mittels einer Vorderachslenkung lenkbare Vorderräder und mittels einer Hinterachslenkung lenkbare Hinterräder aufweisen. Das Verfahren umfasst die Schritte:
a) Führen eines Fahrzeugs von einer Startposition für den Einparkvorgang zu einer Referenzposition entlang eines ersten Streckenabschnittes, wobei das Führen des Fahrzeugs entlang des ersten Streckenabschnittes mit gegensinnig eingestellten Lenkwinkeln der Vorderräder und Hinterräder erfolgt,
b) Führen des Fahrzeugs von der Referenzposition bis zu einer Zielposition in der Querparklücke entlang eines zweiten Streckenabschnittes, wobei das Führen des Fahrzeugs entlang zumindest eines Teilabschnittes des zweiten Streckenabschnittes mit gleichsinnig eingestellten Lenkwinkeln der Vorderräder und Hinterräder erfolgt.

Im Vergleich zum Stand der Technik wird durch das erfindungsgemäße Verfahren der Einparkvorgang des Fahrzeugs in die Querparklücke unter Verwendung der aktiven Hinterachslenkung optimiert. Vorteilhaft wird dabei gleichsinniges Lenken der hinteren und vorderen Räder mit gegensinnigem Lenken der hinteren und vorderen Räder kombiniert. Durch das gegensinnige Ansteuern der Vorderräder und Hinterräder beim Führen des Fahrzeugs im Schritt a) kann ein kleinerer Radius gefahren werden als mit ungelenkten Hinterrädern oder mit gleichsinnig eingestellten Lenkwinkeln.

Durch das gleichsinnige Ansteuern der Vorderräder und Hinterräder beim Führen des Fahrzeugs im Schritt b) werden die Seitenabstände zu Parkraumbegrenzungselementen optimiert, was insbesondere in engen Situationen vorteilhaft ist. Hierdurch verringert sich die Anzahl der Fahrzüge, die notwendig sind, um die Zielposition, d.h. eine Parkposition in der Querparklücke, zu erreichen.

Es ist auch möglich, ein geführtes Vorwärtseinparken zu etablieren, wobei in einem S-Zug zunächst auf einem ersten Kreisbogen gleichsinnig und daraufhin auf einem zweiten Kreisbogen gegensinnig gelenkt, also genau umgekehrt wie bei der Rückwärtsfahrt, auf welche sich hier und im Folgenden die weitere Beschreibung ausschließlich beziehen wird.

Durch die in den abhängigen Ansprüchen aufgeführten Maßnahmen sind vorteilhafte Weiterbildungen und Verbesserungen des im unabhängigen Anspruch angegebenen Verfahrens möglich.

Nach einer bevorzugten Ausführungsform ist vorgesehen, dass der Einparkvorgang einzügig durchgeführt wird. Mit "einzügig" wird dabei bezeichnet, dass kein Wechsel von einem Vorwärts- zu einem Rückwärtsgang oder von einem Rückwärts- zu einem Vorwärtsgang erfolgt. Insbesondere werden die Schritte a) und b) des Verfahrens einzügig, das heißt in einem gemeinsamen Fahrzug, durchgeführt.

Das Einparken ist aus nahezu allen Positionen möglich, nachdem das Fahrzeug an der Parklücke vorbeigefahren ist. Die Startposition für den Einparkvorgang kann so bestimmt sein, dass das Fahrzeug sich mit einer Hauptachse des Fahrzeugs im Wesentlichen rechtwinklig zur Querparklücke befindet. Das Fahrzeug ist dabei zumindest mit seiner Vorderachse an der Parklücke vorbeigefahren, beispielsweise um eine Distanz zwischen 1 und 5 m und/oder das Fahrzeug befindet sich mit einem Abstand zu einer die Querparklücke begrenzenden Ecke von 50 cm bis 3 m.

Nach einer Ausführungsform erfolgt das Führen des Fahrzeugs im Schritt b) entlang des gesamten zweiten Streckenabschnittes mit gleichsinnig eingestellten Lenkwinkeln der Vorderräder und Hinterräder, falls der zweite Streckenabschnitt kürzer als ein Richtwert ist. Hierdurch wird vorteilhaft ein Umlenken der Vorderräder und damit ein Ausscheren des Fahrzeugs vermieden. Der Richtwert liegt bevorzugt bei etwa 1 m bis 2 m, bevorzugt bis 1,5 m.

Für den Fall, dass der zweite Streckenabschnitt kürzer als der Richtwert ist, erfolgt das Führen des Fahrzeugs im Schritt b) entlang des gesamten zweiten Streckenabschnittes bevorzugt bei einem gleich großen Wert der Lenkwinkel der Vorderräder und der Hinterräder und bei einem maximalen Lenkwinkel der Hinterräder. Diese Art der Ansteuerung ist bei kurzer verbleibender Strecke bis zum Erreichen der Zielposition und bei geringem verbleibendem seitlichem Versatz optimal. Das Fahrzeug wird dabei seitlich versetzt, wobei der seitliche Versatz (der sogenannte Dackellauf ΔHₘₐₓ) beispielsweise 5° entspricht.

Nach einer Ausführungsform erfolgt das Führen des Fahrzeugs entlang des zweiten Streckenabschnittes im Schritt b) entlang einer S-Kurve, falls der zweite Streckenabschnitt länger als der Richtwert ist. Mit "S-Kurve" werden dabei zwei aneinandergesetzte Kreisbogenabschnitte bezeichnet, wobei zunächst ein Kreisbogenabschnitt mit einer ersten Krümmung gefahren wird und wobei der zweite Kreisbogenabschnitt mit einer im Allgemeinen von dem ersten Kreisbogenabschnitt verschiedenen Krümmung, insbesondere mit unterschiedlichem Vorzeichen, anschließt. Bevorzugt ist im Anschlusspunkt der beiden Kreisbögen, d.h. mathematisch betrachtet im Wendepunkt, die Krümmung eine stetige Funktion der Bogenlänge. Dies kann dadurch erreicht werden, dass die Vorderräder nicht bei einem Stillstand des Fahrzeugs umgelenkt werden sondern während der Fahrt.

Nach einer Ausführungsform ist vorgesehen, dass das Führen des Fahrzeugs entlang des zweiten Streckenabschnittes im Schritt b) entlang der S-Kurve mit den folgenden Schritten durchgeführt wird:
c) Führen des Fahrzeugs entlang eines ersten Teilabschnittes des zweiten Streckenabschnittes von der Referenzposition bis zu einer weiteren Referenzposition, wobei das Führen des Fahrzeugs entlang des ersten Teilabschnittes mit gegensinnig eingestellten Lenkwinkeln der Vorderräder und Hinterräder erfolgt und
d) Führen des Fahrzeugs entlang eines zweiten Teilabschnittes des zweiten Streckenabschnittes von im Wesentlichen der weiteren Referenzposition bis im Wesentlichen zur Zielposition in der Querparklücke, wobei das Führen des Fahrzeugs mit gleichsinnig eingestellten Lenkwinkeln der Vorderräder und Hinterräder erfolgt.

Bevorzugt werden die Schritte c) und d) des Verfahrens, besonders bevorzugt die Schritte a), b), c) und d) des Verfahrens einzügig, das heißt in einem gemeinsamen Fahrzug ohne Wechsel zwischen einem Rückwärts- und einem Vorwärtsgang des Fahrzeugs, durchgeführt.

Bei der weiteren Referenzposition werden die Vorderräder umgelenkt, sodass das Fahrzeug im ersten Teilabschnitt auf einem Kreisbogen mit einem ersten Radius bewegt wird und in dem zweiten Teilabschnitt auf einem Kreisbogen mit einem zweiten Radius bewegt wird, wobei die Radien nicht notwendigerweise gleich sind und, wie zuvor beschrieben, ein stetiger Krümmungswechsel bevorzugt wird. Der Ausdruck "im Wesentlichen von der Referenzposition" soll dabei ausdrücken, dass die Vorderräder nicht beim Stillstand des Fahrzeugs umgelenkt werden sondern während der Fahrt.

Der Ausdruck "im Wesentlichen bis zur Zielposition" ist dem Umstand geschuldet, dass als vorteilhaft angesehen wird, kurz bevor die Zielposition erreicht ist, die Vorder- und Hinterräder derart gerade umzulenken, dass alle vier Räder in der Zielposition die Nullstellung erreichen. Dies könnte zwar auch auf der Zielposition geschehen, jedoch ist dies mit erhöhter Reibung und der Gefahr des Übersteuerns verbunden, sodass ein sanfter Übergang, beispielsweise über eine Fahrstrecke von 40 cm bis 80 cm zu bevorzugen ist.

Nach einer Ausführungsform der Erfindung wird der Lenkwinkel der Hinterräder auf Null reduziert und der Einparkvorgang ohne weitere Lenkung der Hinterräder weitergeführt, falls der Fahrer das Fahrzeug unter eine Mindestgeschwindigkeit oder in den Stillstand bremst. Eine derartige Mindestgeschwindigkeit kann beispielsweise 0,5 km/h sein. Diese Ausführungsform ist vorteilhaft, wenn das Lenken der Räder der Hinterachse nicht im Stillstand oder bei sehr langsamer Fahrt des Fahrzeugs durchgeführt werden kann, um eine Überlastung des Motors zu verhindern.

Insbesondere kann vorgesehen sein, dass lediglich im Schritt b) der Lenkwinkel der Hinterräder auf Null reduziert wird und der Einparkvorgang ohne weitere Lenkung der Hinterräder weitergeführt wird, falls der Fahrer das Fahrzeug unter die Mindestgeschwindigkeit oder in den Stillstand bremst.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder Einparkassistenten oder Subsystems hiervon in einem Fahrzeug handeln. Das Computerprogramm kann auf einem maschinenlesbaren Speichermedium gespeichert werden, etwa auf einem permanenten oder wieder beschreibbaren Speichermedium, oder in Zuordnung zu einer Computereinrichtung oder auf einer entfernbaren CD-ROM, DVD, einer Blu-Ray-Disk oder einem USB-Stick. Zusätzlich oder alternativ kann das Computerprogramm auf einer Computereinrichtung wie etwa auf einem Server oder auf einem Cloud-System zum Herunterladen bereitgestellt werden, z.B. über ein Datennetzwerk, wie das Internet, oder eine Kommunikationsverbindung, wie etwa eine Telefonleitung oder eine drahtlose Verbindung.

Erfindungsgemäß wird außerdem ein Einparkassistent eines Fahrzeugs vorgeschlagen, wobei das Fahrzeug mittels einer Vorderachslenkung lenkbare Vorderräder und mittels einer Hinterachslenkung lenkbare Hinterräder aufweist, mit
i) einer Einheit zum Ermitteln einer Trajektorie für einen Einparkvorgang eines Fahrzeugs in eine Querparklücke,
   wobei die Trajektorie einen ersten Streckenabschnitt von einer Startposition für den Einparkvorgang bis zu einer Referenzposition aufweist, wobei das Führen des Fahrzeugs entlang des ersten Streckenabschnittes mit gegensinnig eingestellten Lenkwinkeln der Vorderräder und Hinterräder erfolgt, und
   wobei die Trajektorie einen zweiten Streckenabschnitt von der Referenzposition bis zu einer Zielposition in der Querparklücke aufweist, wobei das Führen des Fahrzeugs entlang zumindest eines Teilabschnittes des zweiten Streckenabschnittes mit gleichsinnig eingestellten Lenkwinkeln der Vorderräder und Hinterräder erfolgt, und
ii) einer Einheit zum semiautonomen oder autonomen Durchführen des Einparkvorgangs, welche Trajektorien von der Einheit zum Ermitteln der Trajektorie verwendet.

Gegenüber herkömmlich geplanten Trajektorien mit Kreisbögen berücksichtigt der Einparkassistent die Lenkwinkel der Hinterräder als zusätzliche seitliche Bewegungskomponente.

Dadurch, dass der erste Streckenabschnitt mit gegensinnig eingestellten Lenkwinkeln der Vorderräder und Hinterräder befahren wird, kann bei der Trajektorienplanung für den ersten Streckenabschnitt ein engerer Wendekreis eingestellt werden.

Dadurch, dass außerdem der zweite Streckenabschnitt zumindest in einem Teilabschnitt mit gleichsinnig eingestellten Lenkwinkeln der Vorderräder und Hinterräder befahren wird, kann bei der Trajektorienplanung der hierdurch erreichbare seitliche Versatz berücksichtigt werden.

Das Führen des Fahrzeugs entlang der Trajektorie kann durch Ausgabe von Hinweisen an den Fahrer semiautonom oder autonom erfolgen.

Werden Hinweise an den Fahrer ausgegeben, so kann der Fahrer sowohl die Längsführung, beispielsweise das Bremsen und die Geschwindigkeitsregelung, als auch die Querführung, beispielsweise Lenkbewegungen, übernehmen. Die ausgegebenen Hinweise können beispielsweise Anhalten, Fahrrichtungswechsel oder notwendige Lenkbewegungen betreffen. Derartige Hinweise können optisch, akustisch oder haptisch an den Fahrer ausgegeben werden.

Beim autonomen oder voll-automatischen Führen wird sowohl die Längsführung als auch die Querführung, z.B. durch ein Steuergerät eines Fahrassistenzsystems, übernommen. Zum Steuern der Längsführung kann das Steuergerät des Fahrassistenzsystems z.B. den Motor oder die Bremsanlage des Fahrzeugs steuern. Zum Steuern der Querführung kann das Steuergerät des Fahrassistenzsystems z.B. das Lenksystem steuern. Nach einer bevorzugten Ausführungsform steuert die Einheit zum semiautonomen oder autonomen Durchführen des Einparkvorgangs dabei insbesondere die Hinterachslenkung des Fahrzeugs.

Im Unterschied zum autonomen Führen wird beim semiautonomen Führen nur die Längsführung oder nur die Querführung durch ein Steuergerät eines Fahrassistenzsystems automatisch gesteuert. Im Übrigen übernimmt der Fahrer des Fahrzeugs aktiv die jeweils fehlende Komponente, wobei vom Fahrassistenzsystem Hinweise an den Fahrer ausgegeben werden können.

Bevorzugt ist der Einparkassistent zum Durchführen der hierin beschriebenen Verfahren ausgebildet und/oder eingerichtet. Dementsprechend gelten im Rahmen des Verfahrens beschriebene Merkmale entsprechend für den Einparkassistenten und umgekehrt die im Rahmen des Einparkassistenten beschriebenen Merkmale entsprechend für das Verfahren.

Die Einheiten des Einparkassistenten sind als funktionale Einheiten zu verstehen, die nicht notwendigerweise physikalisch voneinander getrennt sind. So können mehrere Einheiten des Einparkassistenten in einer einzigen physikalischen Einheit realisiert sein, etwa wenn mehrere Funktionen in Software oder auf einem anwendungsspezifischen integrierten Schaltkreis (ASIC) auf einem Steuergerät implementiert sind. Weiterhin können die Funktionen der Einheiten auch in Hardware, beispielsweise durch Sensoreinheiten oder Speichereinheiten, realisiert sein.

Gegenstand der Erfindung ist zudem ein Fahrzeug, das mit dem vorstehend beschriebenen Einparkassistenten ausgerüstet ist.

### Kurze Beschreibung der Zeichnungen

Ausführungsbeispiele der Erfindung sind in den Zeichnungen dargestellt und in der nachfolgenden Beschreibung näher erläutert. Es zeigen:
Figur 1 eine Situation mit einem Fahrzeug und einer Querparklücke,
Figur 2 ein Fahrzeug, welches eine S-Kurve fährt, und
Figur 3 ein Fahrzeug mit einem Einparkassistenten.

In der nachfolgenden Beschreibung der Ausführungsbeispiele der Erfindung werden gleiche oder ähnliche Komponenten mit gleichen oder ähnlichen Bezugszeichen bezeichnet, wobei in Einzelfällen auf eine wiederholte Beschreibung der Komponenten verzichtet wird. Die Figuren stellen den Gegenstand der Erfindung nur schematisch dar.

### Ausführungsformen der Erfindung

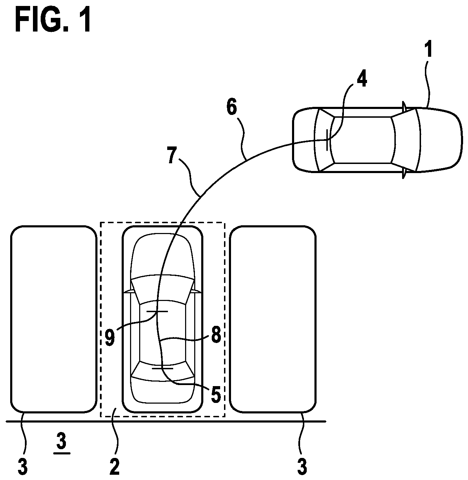

Figur 1 zeigt eine beispielhafte Fahrsituation mit einem Fahrzeug 1 und einer Querparklücke 2. Die Querparklücke 2 ist durch Parkraumbegrenzungselemente 3 linksseitig und rechtsseitig begrenzt, beispielsweise durch weitere parkende Fahrzeuge, sowie durch ein weiteres Parkraumbegrenzungselement 3 rückseitig, beispielsweise einen Bordstein.

Das Fahrzeug 1 befindet sich in einer Startposition 4 für einen Einparkvorgang in die Querparklücke 2. Beim Einparken erfolgt eine Führung des Fahrzeugs 1 auf einer Trajektorie 6 von der Startposition 4 zu einer Zielposition 5, welche eine Parkposition in der Querparklücke 2 ist.

Das Fahrzeug 1 wird von der Startposition 4 über eine Referenzposition 9 auf die Zielposition 5 geführt. Die Startposition 4, die Zielposition 5 und die Referenzposition 9 sind beispielhaft bezüglich der Lage des Mittelpunktes einer Hinterachse 13 des Fahrzeugs 1 dargestellt, wobei selbstverständlich ein beliebiger weiterer Bezugspunkt des Fahrzeugs 1 verwendet werden kann, wenn dies zweckmäßig ist.

Die Trajektorie 6 weist einen ersten Streckenabschnitt 7 von der Startposition 4 zur Referenzposition 9 auf, auf welchem das Fahrzeug 1 entlang eines Kreisabschnittes geführt wird. Die Trajektorie 6 weist einen zweiten Streckenabschnitt 8 von der Referenzposition 9 zur Zielposition 5 auf, auf welchem das Fahrzeug 1, hier beispielsweise, entlang einer S-Kurve geführt wird.

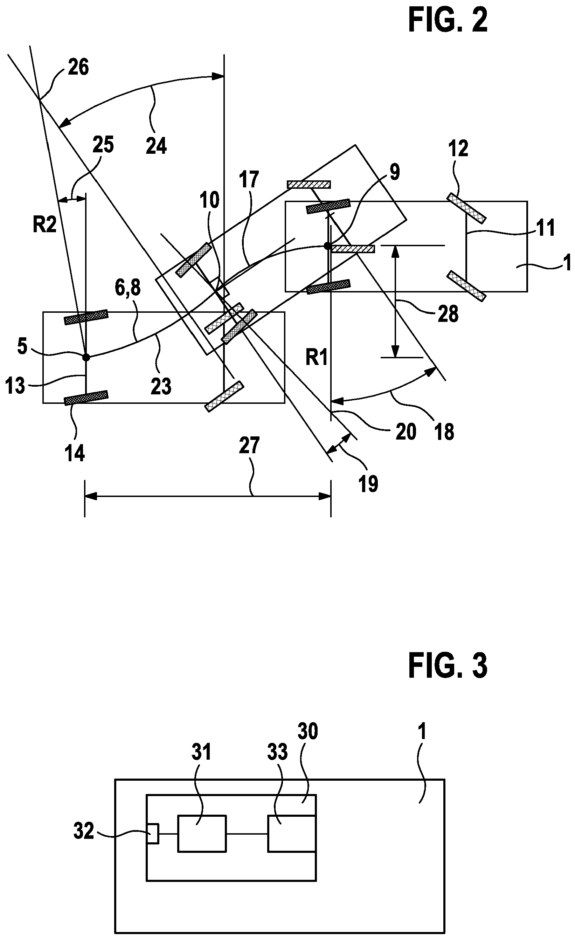

Figur 2 zeigt das Fahrzeug 1, welches von der Referenzposition 9 über eine weitere Referenzposition 10 zur Zielposition 5 geführt wird. In Figur 2 ist daher nur der zweite Streckenabschnitt 8 der Trajektorie 6 des Fahrzeugs 1 dargestellt.

Das Fahrzeug 1 weist eine Vorderachse 11 auf und mittels einer Vorderachslenkung lenkbare Vorderräder 12. Das Fahrzeug 1 weist außerdem eine Hinterachse 13 auf und mittels einer Hinterachslenkung lenkbare Hinterräder 14.

Der Abschnitt der Trajektorie 6, welcher von der Referenzposition 9 bis zur weiteren Referenzposition 10 reicht, wird als erster Teilabschnitt 17 des zweiten Streckenabschnittes 8 bezeichnet. Beim Führen des Fahrzeugs 1 entlang des ersten Teilabschnittes 17 des zweiten Streckenabschnittes 8 erfolgt das Führen des Fahrzeugs 1 mit gegensinnig eingestellten Lenkwinkeln 18, 19 der Vorderräder 12 und Hinterräder 14.

Hierdurch ergibt sich eine Bewegung auf einem Kreisbogen mit einem ersten Radius R1 um einen ersten Drehpol 20, welcher sich näherungsweise als Schnittpunkt des mittleren Lenkwinkels 18 der Vorderräder 12 im ersten Teilabschnitt 17 und des mittleren Lenkwinkels 19 der Hinterräder 14 im ersten Teilabschnitt 17 ergibt.

Der erste Drehpol 20 liegt dabei zwischen der Vorderachse 11 und der Hinterachse 13. Daher können kleinere Wenderadien gefahren werden als mit ungelenkten Hinterrädern 14.

Entlang eines zweiten Teilabschnittes 23 des zweiten Streckenabschnittes 8 erfolgt das Führen des Fahrzeugs 1 von der weiteren Referenzposition 10 bis zur Zielposition 5 mit gleichsinnig eingestellten Lenkwinkeln 24, 25 der Vorderräder 12 und Hinterräder 14.

Die Trajektorie 6 des Fahrzeugs 1 bildet einen Abschnitt eines Kreisbogens mit einem zweiten Radius R2 um einen zweiten Drehpol 26, welcher sich aus dem Schnittpunkt des Lenkwinkels 24 der Vorderräder 12 im zweiten Teilabschnitt 23 und dem Lenkwinkel 25 der Hinterräder 14 im zweiten Teilabschnitt 23 ergibt. Der zweite Drehpol 26 liegt dabei hinter der Hinterachse 13 des Fahrzeugs 1. Der zweite Radius R2 ist daher größer als der erste Radius R1.

Mit der beschriebenen Trajektorie 6 erreicht das Fahrzeug 1 bei einem Längsversatz 27 einen Querversatz 28, welcher größer ist als bei jeder anderen Ansteuerungsart der Vierradlenkung. Das Verhältnis des Querversatzes 28 zum Längsversatz 27 ist insbesondere größer als bei gegensinniger Ansteuerung der Hinterachslenkung und der Vorderachslenkung auf beiden Teilabschnitten 17, 23 oder bei gleichsinniger Ansteuerung der Hinterachslenkung und der Vorderachslenkung auf beiden Teilabschnitten 17, 23.

Die Streckenabschnitte 7, 8 und Teilabschnitte 17, 23 können sowohl mit Bezug zu ihrer Bogenlänge parametrisiert sein, als auch mit Bezug zum Längsversatz 27. Insbesondere kann der vorgegebene Richtwert, bei welchem das Führen des Fahrzeugs 1 entlang des zweiten Streckenabschnitts 8 entlang einer S-Kurve erfolgt, bezüglich des Längsversatzes 27 als auch bezüglich der Bogenlänge der ermittelten Trajektorie 6 definiert sein.

Ein Vorteil der vorgestellten Variante zur Korrektur des lateralen Querversatzes 28 zur Zielposition 5 ist, dass der S-Zug direkt an den Einlenkkreisbogen angefügt werden kann, d.h., dass der zweite Streckenabschnitt 8 direkt an den ersten Streckenabschnitt 7 angefügt werden kann, ohne dass ein Umlenken der Hinterräder 14 erfolgen muss.

In Weiterentwicklungen der Erfindung kann das gleichsinnige Ansteuern der Hinterräder 14 auch in weiteren Folgezügen erfolgen, um das Fahrzeug 1 mittig innerhalb der Querparklücke 2 zu platzieren, falls das Parkmanöver nicht einzügig durchgeführt werden kann.

Die beschriebene Trajektorie 6 kann auch dazu verwendet werden, das Fahrzeug 1 für ein induktives Laden auf einer bestimmten Fläche zu platzieren.

Auch beim geführten Vorwärtseinparken werden häufig S-Züge zum Rangieren verwendet. Dabei wird bei einem S-Zug in Vorwärtsfahrt auf einem ersten Kreisbogen gleichsinnig und im zweiten Kreisbogen gegensinnig gelenkt, also genau umgekehrt wie bei der Rückwärtsfahrt, welche mit Bezug zu Figuren 1 und 2 beschrieben wurde.

Figur 3 zeigt das Fahrzeug 1 mit einem Einparkassistenten 30 in schematisierter Darstellung.

Der Einparkassistent 30 weist eine Einheit 31 zum Ermitteln einer Trajektorie auf, welche eine Schnittstelle 32 zu Umfeldsensoren des Fahrzeugs 1 aufweist. Die Umfeldsensoren können beispielsweise Radarsensoren, LIDAR-Sensoren, Ultraschallsensoren, Kameras und/oder GPS-Sensoren umfassen, deren Daten oder Messwerte von der Einheit 31 zum Ermitteln der Trajektorie bekanntermaßen empfangen und verarbeitet werden.

Der Einparkassistent 30 umfasst außerdem eine Einheit 33 zum semiautonomen oder autonomen Durchführen des Einparkvorgangs, wobei die Einheit 33 Trajektorien von der Einheit 31 zum Ermitteln der Trajektorie erhält, um hierauf basierend die Steuerung des Einparkvorgangs zu übernehmen.

Die Erfindung ist nicht auf die hierin beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Durchführung eines Einparkvorgangs eines Fahrzeugs (1) in eine Querparklücke (2), wobei das Fahrzeug (1) mittels einer Vorderachslenkung lenkbare Vorderräder (12) und mittels einer Hinterachslenkung lenkbare Hinterräder (14) aufweist, mit den Schritten:
a) Führen des Fahrzeugs (1) von einer Startposition (4) für den Einparkvorgang zu einer Referenzposition (9) entlang eines ersten Streckenabschnittes (7), wobei das Führen des Fahrzeugs (1) entlang des ersten Streckenabschnittes (7) mit gegensinnig eingestellten Lenkwinkeln (18, 19) der Vorderräder (12) und Hinterräder (14) erfolgt,
b) Führen des Fahrzeugs (1) von der Referenzposition (9) bis zu einer Zielposition (5) in der Querparklücke (2) entlang eines zweiten Streckenabschnittes (8), wobei das Führen des Fahrzeugs (1) entlang zumindest eines Teilabschnittes (17, 18) des zweiten Streckenabschnittes (8) mit gleichsinnig eingestellten Lenkwinkeln (18, 19) der Vorderräder (12) und Hinterräder (14) erfolgt.

2. Verfahren nach Anspruch 1, **dadurch gekennzeichnet, dass** der Einparkvorgang einzügig durchgeführt wird.

3. Verfahren nach einem der vorhergehenden Ansprüche, **dadurch gekennzeichnet, dass** das Führen des Fahrzeugs (1) im Schritt b) entlang des gesamten zweiten Streckenabschnittes (8) mit gleichsinnig eingestellten Lenkwinkeln (18, 19) der Vorderräder (12) und Hinterräder (14) erfolgt, falls der zweite Streckenabschnitt (8) kürzer als ein Richtwert ist.

4. Verfahren nach Anspruch 3, **dadurch gekennzeichnet, dass** das Führen des Fahrzeugs (1) im Schritt b) entlang des gesamten zweiten Streckenabschnittes (8) bei einem maximalen Lenkwinkel (19) der Hinterräder (14) und/oder bei einem gleich großen Wert der Lenkwinkel (18, 19) der Vorderräder (12) und Hinterräder (14) erfolgt.

5. Verfahren nach einem der vorhergehenden Ansprüche 3 oder 4, **dadurch gekennzeichnet, dass** das Führen des Fahrzeugs (1) entlang des zweiten Streckenabschnittes (8) im Schritt b) entlang einer S-Kurve erfolgt, falls der zweite Streckenabschnitt (8) länger als der Richtwert ist.

6. Verfahren nach Anspruch 5, **dadurch gekennzeichnet, dass** das Führen des Fahrzeugs (1) entlang des zweiten Streckenabschnittes (8) im Schritt b) entlang der S-Kurve mit den folgenden Schritten durchgeführt wird:
c) Führen des Fahrzeugs (1) entlang eines ersten Teilabschnittes (17) des zweiten Streckenabschnittes (8) von der Referenzposition (9) bis zu einer weiteren Referenzposition (10), wobei das Führen des Fahrzeugs (1) entlang des ersten Teilabschnittes (17) mit gegensinnig eingestellten Lenkwinkeln (18, 19) der Vorderräder (12) und Hinterräder (14) erfolgt und
d) Führen des Fahrzeugs (1) entlang eines zweiten Teilabschnittes (23) des zweiten Streckenabschnittes (8) von der weiteren Referenzposition (10) im Wesentlichen bis zur Zielposition (5) in der Querparklücke (2), wobei das Führen des Fahrzeugs (1) mit gleichsinnig eingestellten Lenkwinkeln (18, 19) der Vorderräder (12) und Hinterräder (14) erfolgt.

7. Verfahren nach einem der vorhergehenden Ansprüche, **dadurch gekennzeichnet, dass** der Lenkwinkel (19) der Hinterräder (14) auf Null reduziert und der Einparkvorgang ohne weitere Lenkung der Hinterräder (14) weitergeführt wird, sobald beim Führen des Fahrzeugs (1) der Fahrer das Fahrzeug (1) unter eine Mindestgeschwindigkeit oder in den Stillstand bremst.

8. Computerprogramm zur Durchführung eines Verfahrens nach einem der Ansprüche 1 bis 7, wenn das Computerprogramm auf einer programmierbaren Computereinrichtung ausgeführt wird.

9. Einparkassistent (30) eines Fahrzeugs (1), welches mittels einer Vorderachslenkung lenkbare Vorderräder (12) und mittels einer Hinterachslenkung lenkbare Hinterräder (14) aufweist, mit
i) einer Einheit (31) zum Ermitteln einer Trajektorie für einen Einparkvorgang eines Fahrzeugs (1) in eine Querparklücke (2),
wobei die Trajektorie (6) einen ersten Streckenabschnitt (7) von einer Startposition (4) für den Einparkvorgang bis zu einer Referenzposition (9) aufweist, wobei das Führen des Fahrzeugs (1) entlang des ersten Streckenabschnittes (7) mit gegensinnig eingestellten Lenkwinkeln (18, 19) der Vorderräder (12) und Hinterräder (14) erfolgt, und
wobei die Trajektorie (6) einen zweiten Streckenabschnitt (8) von der Referenzposition (9) bis zu einer Zielposition (5) in der Querparklücke (2) aufweist, wobei das Führen des Fahrzeugs (1) entlang zumindest eines Teilabschnittes (17, 23) des zweiten Streckenabschnittes (8) mit gleichsinnig eingestellten Lenkwinkeln (18, 19) der Vorderräder (12) und Hinterräder (14) erfolgt, und
ii) einer Einheit (33) zum semiautonomen oder autonomen Durchführen des Einparkvorgangs, welche Trajektorien (6) von der Einheit (31) zum Ermitteln der Trajektorie verwendet.

10. Fahrzeug (1), ausgerüstet mit einem Einparkassistenten (30) nach Anspruch 9.

## Claims

1. Method for performing a parking procedure of a vehicle (1) into a perpendicular parking space (2), wherein the vehicle (1) has front wheels (12) which can be steered by means of a front-axle steering system and rear wheels (14) which can be steered by means of a rear-axle steering system, comprising the steps:
a) guiding the vehicle (1) from a starting position (4) for the parking process to a reference position (9) along a first manoeuvre section (7) wherein the vehicle (1) is guided along the first manoeuvre section (7) with steering angles (18, 19) of the front wheels (12) and rear wheels (14) which are set in opposite directions and
b) guiding the vehicle (1) from the reference position (9) up to a target position (5) in the perpendicular parking space (2) along a second manoeuvre section (8), wherein the vehicle (1) is guided along at least one partial section (17, 18) of the second manoeuvre section (8) with steering angles (18, 19) of the front wheels (12) and rear wheels (14) which are set in the same direction.

2. Method according to Claim 1, **characterized in that** the parking procedure is carried out in a single movement.

3. Method according to one of the preceding claims, **characterized in that** the vehicle (1) is guided in step b) along the entire second manoeuvre section (8) with steering angles (18, 19) of the front wheels (12) and rear wheels (14) which are set in the same direction, if the second manoeuvre section (8) is shorter than a guide value.

4. Method according to Claim 3, **characterized in that** the vehicle (1) is guided in step b) along the entire second manoeuvre section (8) at a maximum steering angle (19) of the rear wheels (14) and/or at an equally large value of the steering angle (18, 19) of the front wheels (12) and rear wheels (14).

5. Method according to one of the preceding Claims 3 or 4, **characterized in that** the vehicle (1) is guided along the second manoeuvre section (8) in the step b) along an S curve if the second manoeuvre section (8) is longer than the guide value.

6. Method according to Claim 5, **characterized in that** the vehicle (1) is guided along the second manoeuvre section (8) in step b) along the S curve with the following steps:
c) guiding the vehicle (1) along a first partial section (17) of the second manoeuvre section (8) from the reference position (9) up to a further reference position (10), wherein the vehicle (1) is guided along the first partial section (17) with steering angles (18, 19) of the front wheels (12) and rear wheels (14) which are set in opposite directions, and
d) guiding the vehicle (1) along a second partial section (23) of the second manoeuvre section (8) from the further reference position (10) essentially up to the target position (5) in the perpendicular parking space (2), wherein the vehicle (1) is guided with steering angles (18, 19) of the front wheels (12) and rear wheels (14) which are set in the same direction.

7. Method according to one of the preceding claims, **characterized in that** the steering angle (19) of the rear wheels (14) is reduced to zero, and the parking process is continued without further steering of the rear wheels (14) as long as, during the guiding of the vehicle (1), the driver brakes the vehicle (1) to below a minimum speed or to the stationary state.

8. Computer program for carrying out a method according to one of Claims 1 to 7 when the computer program is run on a programmable computer device.

9. Parking assistant (30) of a vehicle (1) which has front wheels (12) which can be steered by means of a front-axle steering system and rear wheels (14) which can be steered by means of a rear-axle steering system, comprising
i) a unit (31) for determining a trajectory for a parking process of a vehicle (1) into a perpendicular parking space (2),
wherein the trajectory (6) has a first manoeuvre section (7) from a starting positon (4) for the parking process up to a reference position (9), wherein the vehicle (1) is guided along the first manoeuvre section (7) with steering angles (18, 19) of the front wheels (12) and rear wheels (14) which are set in opposite directions, and
wherein the trajectory (6) has a second manoeuvre section (8) from the reference positon (9) to a target position (5) in the perpendicular parking space (2), wherein the vehicle (1) is guided along at least one partial section (17, 23) of the second manoeuvre section (8) with steering angles (18, 19) of the front wheels (12) and rear wheels (14) which are set in the same direction, and
ii) a unit (33) for semi-autonomously or autonomously carrying out the parking process, which unit (33) uses trajectories (6) from the unit (31) for acquiring the trajectory.

10. Vehicle (1), equipped with a parking assistant (30) according to Claim 9.

## Revendications

1. Procédé d'exécution d'un processus de stationnement d'un véhicule (1) dans une place de stationnement perpendiculaire (2), le véhicule (1) comportant des roues avant (12) dirigeables au moyen d'une direction d'essieu avant et des roues arrière (14) dirigeables au moyen d'une direction d'essieu arrière, avec les étapes suivantes :
a) guidage du véhicule (1) d'une position de départ (4) pour le processus de stationnement jusqu'à une position de référence (9) le long d'une première section de tronçon (7), le guidage du véhicule (1) étant effectué le long de la première section de tronçon (7) avec des angles de braquage (18, 19) contraires des roues avant (12) et des roues arrière (14) ;
b) guidage du véhicule (1) de la position de référence (9) jusqu'à une position cible (5) dans la place de stationnement perpendiculaire (2) le long d'une deuxième section de tronçon (8), le guidage du véhicule (1) étant effectué le long d'au moins une section partielle (17, 18) de la deuxième section de tronçon (8) avec des angles de braquage (18, 19) des roues avant (12) et des roues arrière (14) réglés dans le même sens.

2. Procédé selon la revendication 1, **caractérisé en ce que** le processus de stationnement est réalisé en une seule manoeuvre.

3. Procédé selon l'une quelconque des revendications précédentes, **caractérisé en ce que** le guidage du véhicule (1) est effectué à l'étape b) le long de la totalité de la deuxième section de tronçon (8) avec des angles de braquage (18, 19) des roues avant (12) et des roues arrière (14) réglés dans le même sens si la deuxième section de tronçon (8) est plus courte qu'une valeur d'orientation.

4. Procédé selon la revendication 3, **caractérisé en ce que** le guidage du véhicule (1) est effectué à l'étape b) le long de la totalité de la deuxième section de tronçon (8) en cas d'angle de braquage (19) maximal des roues arrière (14) et/ou en cas de valeur de même grandeur des angles de braquage (18, 19) des roues avant (12) et des roues arrière (14).

5. Procédé selon l'une quelconque des revendications précédentes 3 ou 4, **caractérisé en ce que** le guidage du véhicule (1) est effectué le long de la deuxième section de tronçon (8) à l'étape b) le long d'une courbe en S si la deuxième section de tronçon (8) est supérieure à la valeur d'orientation.

6. Procédé selon la revendication 5, **caractérisé en ce que** le guidage du véhicule (1) est réalisé le long de la deuxième section de tronçon (8) à l'étape b) le long de la courbe en S, avec les étapes suivantes :
c) guidage du véhicule (1) le long d'une première section partielle (17) de la deuxième section de tronçon (8) de la position de référence (9) jusqu'à une position de référence (10) supplémentaire, le guidage du véhicule (1) se produisant le long de la première section partielle (17) avec des angles de braquage (18, 19) contraires des roues avant (12) et des roues arrière (14) ; et
d) guidage du véhicule (1) le long d'une deuxième section partielle (23) de la deuxième section de tronçon (8) de la position de référence (10) supplémentaire pour l'essentiel jusqu'à la position cible (5) dans la place de stationnement perpendiculaire (2), le guidage du véhicule (1) étant réalisé avec des angles de braquage (18, 19) des roues avant (12) et des roues arrière (14) réglés dans le même sens.

7. Procédé selon l'une quelconque des revendications précédentes, **caractérisé en ce que** l'angle de braquage (19) des roues arrière (14) est réduit à zéro et que le processus de stationnement est poursuivi sans braquage supplémentaire des roues arrière (14) dès que, lors du guidage du véhicule (1), le conducteur fait freiner le véhicule (1) en dessous d'une vitesse minimale ou jusqu'à l'arrêt.

8. Programme informatique d'exécution d'un procédé selon l'une quelconque des revendications 1 à 7, lorsque le programme informatique est exécuté sur un dispositif à ordinateur programmable.

9. Aide au stationnement (30) d'un véhicule (1) comportant des roues avant (12) dirigeables au moyen d'une direction d'essieu avant et des roues arrière (14) dirigeables au moyen d'une direction d'essieu arrière, avec :
i) une unité (31) de calcul d'une trajectoire pour un processus de stationnement d'un véhicule (1) dans une place de stationnement perpendiculaire (2) ;
la trajectoire (6) comportant une première section de tronçon (7) d'une position de départ (4) pour le processus de stationnement jusqu'à une position de référence (9), le guidage du véhicule (1) se produisant le long de la première section de tronçon (7) avec des angles de braquage (18, 19) contraires des roues avant (12) et des roues arrière (14) ; et
la trajectoire (6) comportant une deuxième section de tronçon (8) de la position de référence (9) jusqu'à une position cible (5) dans la place de stationnement perpendiculaire (2), le guidage du véhicule (1) se produisant le long d'au moins une section partielle (17, 23) de la deuxième section de tronçon (8) avec des angles de braquage (18, 19) des roues avant (12) et des roues arrière (14) réglés dans le même sens ; et
ii) une unité (33) d'exécution semi-automatique ou automatique du processus de stationnement utilisant les trajectoires (6) de l'unité (31) pour calculer la trajectoire.

10. Véhicule (1), équipé d'une aide au stationnement (30) selon la revendication 9.
